# EUROPEAN PATENT APPLICATION

(11) **EP 3 401 617 A1**
(43) Date of publication of application: **14.11.2018**
(21) Application number: 17170947.0
(22) Date of filing: 12.05.2017
(51) Int. Cl.: F24H 3/04, B60H 1/22, H05B 3/06, H05B 3/14, H05B 3/50

(54) **ELECTRIC HEATER**

(71) Applicant: Mahle International GmbH, 70376 Stuttgart (DE)
(72) Inventor: MISS, Pascal, 67600 Sélestat (FR); MAGNIER, Gilles, 90110 Rougemont-le-Château (FR); MARLIER, Eric, 67120 Kolbsheim (FR)
(74) Representative: Grauel, Andreas

(57) **Abstract**

The invention relates to an electric heater (1) in particular for a heating or an air-conditioning system of a motor vehicle, with a heater core (2) comprising a plurality of electric heating elements (3) comprising heating means (6) and contact elements (7) to electrically contacting the heating means (6), said heater core (2) further comprising a plurality of radiator elements (4) which are thermally contacting the heating elements (3), wherein the heating means (6) comprises a central portion (8) and two lateral portions (9), wherein the central portion (8) is arranged between the two lateral portions (9), wherein the radiator elements (4) are thermally contacting the heating means (6) in a central portion (8) and the contact elements (7) are electrically contacting the heating means (6) in the lateral portions (9).

## Description

### Field of the invention

The invention relates to an electric heater, in particular for a heating or an air-conditioning system of a motor vehicle, especially with an electrical and/or thermal engine, with a heater core comprising a plurality of electric heating elements comprising heating means and contact means to electrically contacting the heating means, said heater core further comprising a plurality of radiator elements which are thermally contacting the heating elements.

### Description of the related art

Electric heaters are well known in the art especially for the use as a main heater or an auxiliary heater in a heating or an air-conditioning system of a motor vehicle.

The electric heater is used for example to heat up an air flow generated by a fan of the heating or the air-conditioning system. Such electric heaters often comprise a plurality of electric heating elements which comprise heating means and contact sheets and which are controlled by an electronic controller unit. The electric heating elements are arranged in a heater core together with a plurality of heat dissipating radiator elements which abut against the contact sheets of the electric heating elements or against a tube in which are the contact sheets and the heating means are arranged. Since the contact sheets are located between the heating means and the radiator elements they negatively influence the heat flow from the heating means to the radiator elements.

The documents EP 2 395 295 A1, EP 2 395 296 A1 and EP 2 397 788 A1 disclose such electric heater with contact sheets contacting the heating means and which are arranged between the heating means and the radiator elements. Therefore the heat flow from the heating means to the radiator elements is reduced. This leads to a reduced heating potential of the ceramic heating means and this leads to the problem that the voltage applied to the ceramic heating means is not the nominal voltage. This leads to problems to control the generated heat of the electric heater.

### Object of the invention, solution, advantages

Therefore it is the object of the invention to provide an electric heater which has a better heat performance.

The object is achieved by an electric heater according the features of claim 1.

According to an embodiment of the invention an electric heater is provided, in particular for a heating or an air-conditioning system of a motor vehicle, with a heater core comprising a plurality of electric heating elements comprising heating means and contact elements to electrically contacting the heating means, said heater core further comprising a plurality of radiator elements which are thermally contacting the heating elements, wherein the heating means comprises a central portion and two lateral portions, wherein the central portion is arranged between the two lateral portions, wherein the radiator elements are thermally contacting the heating means in a central portion and the contact elements are electrically contacting the heating means in the lateral portions. This leads to an arrangement in which the thermal contact between the heating means and the radiator elements is not negatively influenced by the electrical contact of the heating means with the contact elements. Therefore the heat transfer and the electric contact is separated and split to different areas of the heating means. According to another aspect the electric heater might be used for other applications too, e.g. for the heating of a coolant of a coolant system, especially to heat a coolant of a high-voltage coolant system.

According to an embodiment of the invention it is of advantage that the heating means has a rectangular cross section with two large side faces and with two short side faces, wherein the central portions are arranged at the middle area of the large side faces and wherein the lateral portions are arranged on the side areas of the large side faces and/or on the short side faces. In particular the heating means is block-shaped with the above mentioned long and short side faces. The two long side faces are arranged oppositely to each other and the two short side faces are arranged oppositely to each other too. A short side face is aligned at a right angle with respect to a long side face.

It is of advantage that the lateral portions are arranged only on the short side faces. Therefore the electrical connection of the heating means is completely separated from the thermal connection to the radiator elements and transferred to another plane which is located in a right angle to the plane of the thermal connection.

According to another aspect of the invention, an embodiment comprises that between the heating means and the radiator elements an electrically insulating insulation layer is arranged. Therefore the heater core is insulated and not on an electrical potential. Therefore the heater core is even usable for high-voltage applications.

According to another inventive embodiment it is of advantage that between the heating means and the contact elements on one side and the radiator elements on the other side an electrically insulating insulation layer is arranged. Therefore the heater core is more appropriate insulated and usable for high-voltage applications.

Furthermore, it is of advantage, that the heating means, the contact elements and the insulation layers are arranged in a tube, wherein the radiator elements are located outside the tube thermally contacting the tube. Therefore the electrical connectable elements are safely located in a tube, which can be closed and sealed such that it is not compromised by dust, dirt or liquids. Furthermore, a tube is more stable against loads from outside the tube.

Furthermore, it is of advantage that the contact elements are including metallic elements which elastically contact the heating means. Therefore the contact elements are able to withstand thermal expansion without loosing the electrical contact to the heating means.

It might be of advantage that the contact elements are glued to the heating means with an adhesive agent. This leads to a mechanically very stable connection.

According to another embodiment it is of advantage that the contact elements are including metallic elements which are c-shaped or block-shaped to contact the heating means at the lateral portions which are arranged on the side areas of the large side faces and/or on the short side faces. This allows another possibility to electrically connect the heating means.

In order to create a safe and stable mechanic and electric connection to the heating means it is of advantage that the contact elements are including metallic elements which are overmolded at their back with an electrically insulating plastic material. The overmolded plastic material increases the stability of the electrical contact element.
In another embodiment of the invention it is possible that the electrical contact is mechanically connected to a plastic part and especially arranged in the plastic part.

Additionally it is of advantage that the insulation layer is provided from a plastic or ceramic material, Kapton or aluminum nitride or other materials with good dielectric properties and high thermal conductivity. Therefore the layer might be thin and having a good thermal conductivity allowing a good thermal contact between the heating means and the radiator element.

Further preferable embodiments of the invention are described in the claims and the following description of the drawings.

### Description of the drawings

The invention is explained in detail below by means of an exemplary embodiment and with reference to the drawings, in which:
- Fig.1: shows a schematic view of an electric heater,
- Fig. 2: shows a cross-section of a heating element with radiator elements,
- Fig. 3: shows a cross-section of a further embodiment of a heating element with radiator elements,
- Fig. 4: shows an arrangement of a heating means with contact elements, and
- Fig. 5: shows an arrangement of a heating means with contact elements.

### Preferred embodiments of the invention

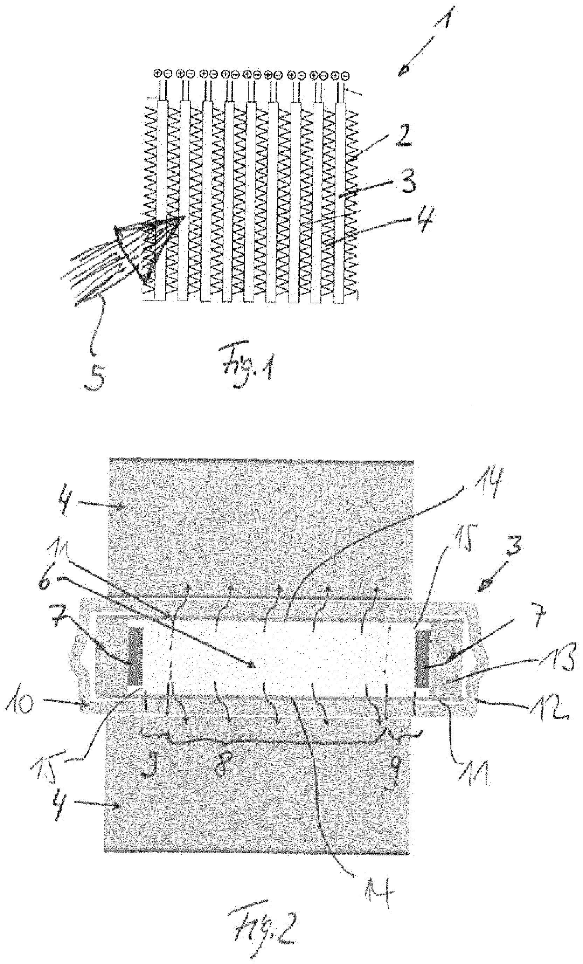

Fig. 1 shows an electric heater 1 with a heater core 2. The electric heater is favorable an electric heater in particular for a heating or an air-conditioning system of a motor vehicle. The electric heater might otherwise be an electric heater for other applications, e.g. for domestic applications.

The heater core 2 comprises a plurality of electric heating elements 3 and a plurality of radiator elements 4. The heating elements 3 are electrically heated due to an electrical current through the heating means in the electrical heating element and the radiator elements 4 are transferring the generated heat to an air flow 5 which passes the radiator elements 4. The heater core 2 is made of a sandwich shaped arrangement of heating elements 3 and of radiator elements 4 such that the air flow 5 passing the radiator elements which are located in a space between two heating elements 3 respectively.

Figure 2 shows a cross-sectional view of a heating element 3 with two radiator elements 4, which are located adjacent to the heating element 3 and on both sides of the heating element 3.

Each heating element 3 comprises at least one or more heating means 6 and at least two contact elements 7 to electrically contacting the heating means 6. The contact elements 7 are electrically connected to a power supply, see e.g. Fig. 1, to allow an electrical current flowing through the heating means 6 which generates heat in the heating means 6. The power supply to the heating means 6 is usually controlled by a control unit, which might be implemented in the electrical heater 1 or which might be located separately from the electrical heater. Such a control unit is not shown.

The heating means 6 are resistive heating means 6 or they are so called PTC-elements with a positive temperature coefficient of their electrical resistance. A resistive element has usually an increasing resistance with increasing temperature. A PTC-element has an increasing resistance with increasing temperature. A PTC-element is typically a ceramic element.

As can be seen from Fig. 1 said heater core 2 comprises a plurality of radiator elements 4 which are thermally contacting the heating elements 3. Therefore heat can be transferred from the heating means 6 to the radiator element 4 and to the air flow through the radiator elements. Instead of air another medium flow is useful too. Therefore the heater core 2 of the electrical heater might be used for liquids or other gases too.

As can be seen in Figure 2, the heating means 6 and the contact elements 7 are located in a tube 10 for securing the heating means 6 and the contact elements 7 from outside conditions like dirt, water etc.

As can be seen from Figure 2 the heating means 6 comprises a central portion 8 and two lateral portions 9, wherein the central portion 8 is arranged between the two lateral portions 9. The cross-section of the heating means is almost rectangular and the heating means is almost block shaped. Therefore the central portion of the heating means contacts the tube 10 for allowing a heat transfer to the radiator elements 4. In the area of the central portion 8 the tube has a protruding portion which thermally contacts the heating means.

Within the tube 10, there are located insulating layers 11, which are located between the heating means 6 and the tube 10 or between the heating means 6 and the radiator elements 4. The insulating layer additionally insulates the contact elements 7 electrically against the tube. Between the contact element and a lateral face 12 of the tube 10, there is an additional insulation material 13 as overmold material, which supports the contact element 7. The contact elements 7 are contacting the heating means at the lateral portions 9 of the heating means 6.
In other words, the radiator elements 4 are contacting the heating means 6 in a central portion 8 and the contact elements 7 are contacting the heating means 6 in the lateral portions 9. Therefore the thermal contacts and the electrical contacts of the heating means are separated from each other.

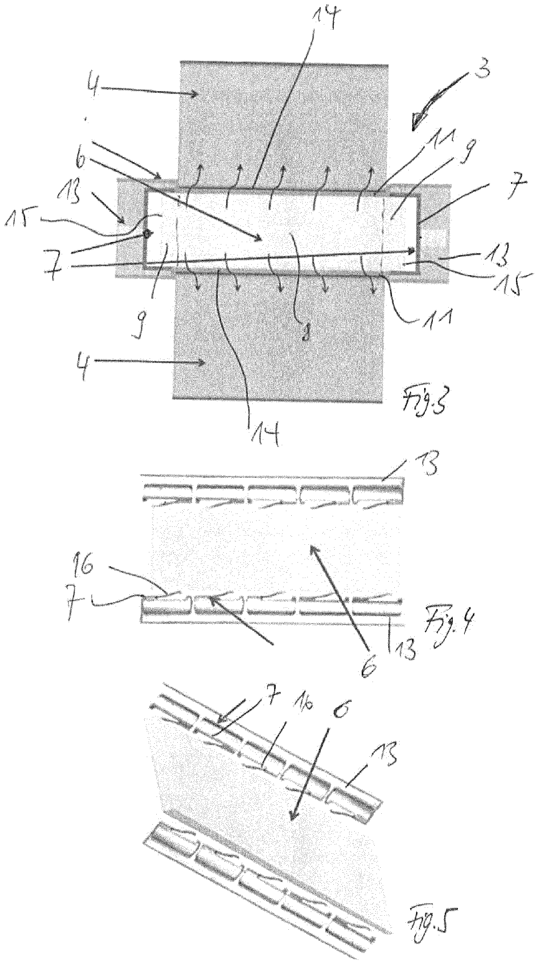

Figure 3 shows another embodiment of an inventive electrical heater, which shows an arrangement similar to the arrangement of Figure 2 but without a tube surrounding the heating means 6.

Each heating element 3 according to the second embodiment comprises at least one or more heating means 6 and at least two contact elements 7 to electrically contacting the heating means 6. The contact elements 7 are electrically connected to a power supply, see e.g. Fig. 1, to allow an electrical current flowing through the heating means 6 which generates heat in the heating means 6. The power supply to the heating means 6 is usually controlled by a control unit, which might be implemented in the electrical heater 1 or which might be located separately from the electrical heater. Such a control unit is not shown.

The heating means 6 are resistive heating means 6 or they are so called PTC-elements with a positive temperature coefficient of their electrical resistance. A resistive element has usually an increasing resistance with increasing temperature. A PTC-element has an increasing resistance with increasing temperature. A PTC-element is typically a ceramic element.

As can be seen from Fig. 1 said heater core 2 comprises a plurality of radiator elements 4 which are thermally contacting the heating elements 3. Therefore heat can be transferred from the heating means 6 to the radiator element 4 and to the air flow 5 through the radiator elements 4. Instead of air another medium flow is useful too. Therefore the heater core 2 of the electrical heater might be used for liquids or other gases too.

As can be seen in Figure 3, the heating means 6 and the contact elements 7 are not located in a tube but in general, it might be possible to arrange a tube like tube 10 of Figure 2 for securing the heating means 6 and the contact elements 7 from outside conditions like dirt, water etc. In the shown embodiment the heating means 6 is surrounded by the insulation layer 11 and with the contact element 7 with the overmolded back 13. Therefore the heating means 6 are protected from dirt, water etc. too.

As can be seen from Figure 3 the heating means 6 comprises a central portion 8 and two lateral portions 9, wherein the central portion 8 is arranged between the two lateral portions 9. The cross-section of the heating means 6 is almost rectangular and the heating means 6 is almost block shaped. Therefore the central portion 8 of the heating means 6 contacts the radiator elements 4 for heat transfer to the radiator elements 4.

On the surface of the heating means 6 insulating layers 11 are located, which are located between the heating means 6 and the radiator elements 4. The insulating layer additionally insulates the contact elements 7 electrically against the tube. The insulation layer 11 is located on the overmolded back 13 of the contact element 7. On the back of the c-shaped contact element 7 is the additional insulation material 13 as overmold material provided, which supports the contact element 7. The contact elements 7 are contacting the heating means at the lateral portions 9 of the heating means 6.

In other words, the radiator elements 4 are contacting the heating means 6 in a central portion 8 and the contact elements 7 are contacting the heating means 6 in the lateral portions 9. Therefore the thermal contacts and the electrical contacts of the heating means 6 are spatial separated from each other.

As can be seen from Figures 2 and 3 the heating means 6 has a rectangular cross section with two large side faces 14 and with two short side faces 15, wherein the central portions 8 are arranged at the middle area of the large side faces 14 and wherein the lateral portions 9 are arranged on the side areas of the large side faces 14 and/or on the short side faces 15. Therefore the thermal contact is provided in a more middle area of the heating means 6 and the electrical contact is located at the lateral areas of the heating means 6.

According to an embodiment the lateral portions 9 are arranged only on the short side faces 15. This allows a clear spatial separation of the thermal contact and the electrical contact.

In order to electrically contact the heating means 6, the contact elements 7 are including metallic elements 16 which elastically contact the heating means 6. Therefore the contact elements 7 act as springs or are provided with spring elements, as can be seen in Figures 4 and 5.

As can be seen in Figures 2 or 3 the contact elements 7 are including metallic elements 16 which are c-shaped or block-shaped or tongue-shaped to contact the heating means 6 at the lateral portions which are arranged on the side areas of the large side faces 14 and/or on the short side faces 15. Between the metallic element 16 and the heating means 6 a welding connection or a gluing connection is possible too.

In order to support the contact elements 7, they are provided with an overmolded plastic material on their back. This supports the spring forces acting against the heating means.

The insulation layer 11 is preferable provided from a plastic or ceramic material.

According to another aspect of an embodiment the contact elements 7 might be glued to the heating means 3 too.

While the invention has been explained with reference to the Figures, it will be clear to those skilled in the arts to which it pertains that a variety of modifications and changes can be made thereto without departing from the scope of the invention.

With regard to the insulation layer 11 the insulation layer might be made from a plastic or ceramic material or another material with high thermal conductivity and good dielectric properties.

In this respect high thermal conductivity means that the thermal conductivity is in a range of 1 W/mK or more up to e.g. 20 W/mK or up to 200 W/mK or more. Having a layer of thickness of larger than 0,5 mm the thermal conductivity is favorable more than 20 W/mK or between 20 W/mK and 200 W/mK or more. Having a layer of thickness of less than 0,5 mm the thermal conductivity is favorable more than 1 W/mK or between 1 W/mK and 20 W/mK or more.

In this respect a material with good dielectric properties means a material having a CTI value (Comparative Tracking Index) of 600 or more.

## Claims

1. Electric heater (1) in particular for a heating or an air-conditioning system of a motor vehicle, with a heater core (2) comprising a plurality of electric heating elements (3) comprising heating means (6) and contact elements (7) to electrically contacting the heating means (6), said heater core (2) further comprising a plurality of radiator elements (4) which are thermally contacting the heating elements (3), wherein the heating means (6) comprises a central portion (8) and two lateral portions (9), wherein the central portion (8) is arranged between the two lateral portions (9), **characterized in that** the radiator elements (4) are thermally contacting the heating means (6) in a central portion (8) and the contact elements (7) are electrically contacting the heating means (6) in the lateral portions (9).

2. Electric heater (1) according to claim 1, **characterized in that** the heating means (6) has a rectangular cross section with two large side faces (14) and with two short side faces (15), wherein the central portions (8) are arranged at the middle area of the large side faces (14) and wherein the lateral portions (9) are arranged on the side areas of the large side faces (14) and/or on the short side faces (15).

3. Electric heater (1) according to claim 2, **characterized in that** the lateral portions (9) are arranged only on the short side faces (15).

4. Electric heater (1) according to claims 1, 2 or 3, **characterized in that** between the heating means (6) and the radiator elements (4) an electrically insulating insulation layer (11) is arranged.

5. Electric heater (1) according to claims 1, 2 or 3, **characterized in that** between the heating means (6) and the contact elements (7) on one side and the radiator elements (4) on the other side an electrically insulating insulation layer (11) is arranged.

6. Electric heater (1) according to one of the preceding claims 1 to 5, **characterized in that** the heating means (6), the contact elements (7) and the insulation layers (11) are arranged in a tube (10), wherein the radiator elements (4) are located outside the tube (10) thermally contacting the tube (10).

7. Electric heater (1) according to one of the preceding claims, **characterized in that** the contact elements (7) are including metallic elements (16) which elastically contact the heating means (6).

8. Electric heater (1) according to one of the preceding claims, **characterized in that** the contact elements are including metallic elements (16) which are c-shaped or block-shaped or tongue-shaped to contact the heating means (6) at the lateral portions (9) which are arranged on the side areas of the large side faces (14) and/or on the short side faces (15).

9. Electric heater (1) according to one of the preceding claims, **characterized in that** the contact elements (7) are including metallic elements (16) which are overmolded with a plastic material or is assembled in a plastic part.

10. Electric heater (1) according to one of the preceding claims 1 to 8, **characterized in that** the contact elements (7) are glued to the heating element (3).

11. Electric heater (1) according to one of the preceding claims, **characterized in that** the insulation layer (11) is provided from a plastic or ceramic material or another material with high thermal conductivity and good dielectric properties.
